# EUROPÄISCHE PATENTSCHRIFT

(11) **EP 2 836 405 B1**
(45) Veröffentlichungstag und Bekanntmachung des Hinweises auf die Patenterteilung: **10.08.2016**
(21) Anmeldenummer: 13709356.3
(22) Anmeldetag: 05.03.2013
(51) Int. Cl.: B60T 11/22, B60T 11/26

(54) **HAUPTBREMSZYLINDERANORDNUNG FÜR EINE KRAFTFAHRZEUG-BREMSANLAGE SOWIE INTEGRALES DICHT-DROSSEL-ELEMENT HIERFÜR**
MASTER BRAKE CYLINDER ARRANGEMENT FOR A MOTOR VEHICLE BRAKE SYSTEM, AND INTEGRAL SEALING THROTTLE ELEMENT FOR THE SAME
ENSEMBLE MAÎTRE-CYLINDRE POUR UN SYSTÈME DE FREINAGE DE VÉHICULE À MOTEUR ET ÉLÉMENT D'ÉTANCHÉITÉ-D'ÉTRANGLEMENT D'UN SEUL TENANT POUR CET ENSEMBLE

(30) Priorität: 12.04.2012 DE 102012007380
(43) Veröffentlichungstag der Anmeldung: 18.02.2015
(73) Patentinhaber: Lucas Automotive GmbH, 56070 Koblenz (DE)
(72) Erfinder: LAREQUI, David Lopéz, 56072 Koblenz (DE); GIESE, Hans-Martin, 56751 Polch (DE)
(74) Vertreter: Thum, Bernhard
(86) Internationale Anmeldenummer: PCT/EP2013/054359
(87) Internationale Veröffentlichungsnummer: WO 2013/152895

(56) Entgegenhaltungen:
- EP-A1- 2 039 574
- EP-A1- 2 216 220
- GB-A- 2 087 018
- US-A1- 2008 276 612
- US-B2- 6 637 201

## Beschreibung

Die vorliegende Erfindung betrifft eine Hauptbremszylinderanordnung für eine Kraftfahrzeug-Bremsanlage, umfassend:
- ein Hauptbremszylindergehäuse mit einer zylindrischen Ausnehmung,
- wenigstens einen in der zylindrischen Ausnehmung des Hauptbremszylindergehäuses verlagerbar und dichtend geführten Druckkolben,
- ein mit dem Hauptbremszylindergehäuse über einen Verbindungsbereich fluidisch gekoppeltes Flüssigkeitsreservoir zum Speichern von Bremsflüssigkeit, wobei der wenigstens eine Druckkolben mit dem Hauptbremszylindergehäuse eine Druckkammer dichtend einschließt, die in Abhängigkeit von der Stellung des Druckkolbens fluidisch mit dem Flüssigkeitsreservoir verbunden oder von diesem getrennt ist, wobei die Druckkammer ferner fluidisch mit einem Bremskreis der Kraftfahrzeug-Bremsanlage koppelbar oder gekoppelt ist, wobei das Flüssigkeitsreservoir in dem Verbindungsbereich mittels eines Dichtelements dichtend in einem Aufnahmeabschnitt des Hauptbremszylindergehäuses aufgenommen ist, und wobei in dem Verbindungsbereich wenigstens ein Drosselelement vorgesehen ist, das in Abhängigkeit von den Druckverhältnissen in der Druckkammer den Fluidstrom zwischen dem Flüssigkeitsreservoir und der Druckkammer durch den Verbindungsbereich drosselt oder freigibt.

Diese Hauptbremszylinderanordnung trägt der folgenden Situation Rechnung: In einem Ausgangszustand vor Betätigung der Bremse, in dem der Druckkolben über eine Rückstellfeder in eine Ausgangsstellung vorgespannt ist, besteht eine fluidische Verbindung zwischen dem Fluidreservoir und der von dem Druckkolben begrenzten Druckkammer. Diese fluidische Verbindung wird über Durchbrüche in einem hohlzylindrischen Abschnitt des Druckkolbens gewährleistet, wobei diese Durchbrüche in der Ausgangsstellung in einem Bereich zwischen zwei den Druckkolben umgebenden Umfangsdichtungen liegen. Wird aus dieser Ausgangsstellung heraus die Bremsanlage betätigt, so wird der Druckkolben in dem Hauptbremszylindergehäuse entsprechend verlagert. Solange aber die Verbindungsbohrungen in dem hohlzylindrischen Abschnitt des Druckkolbens eine zugeordnete Umfangsdichtung noch nicht vollständig passiert haben, so dass weiterhin eine fluidische Verbindung zwischen der Druckkammer und dem Flüssigkeitsreservoir besteht, kommt es vorübergehend zu einem verzögerten Druckaufbau. Die Geschwindigkeit, mit der im Bremskreis Druck aufgebaut wird, hängt vom jeweiligen Volumen des Leckagestroms ab, also dem Volumen an Bremsflüssigkeit, das über die noch nicht vollständig geschlossenen Durchbrüche in das Flüssigkeitsreservoir abströmen kann. Zusätzlich kommt es durch Elastizitäten und Reibung der Umfangsdichtung am Druckkolben zu dynamischen Änderungen der Größe der Verbindungsspalte und dadurch zu sich gleichfalls dynamisch ändernden Leckageströmen und -volumen, was in dieser Übergangsphase zu einem schwingenden oder pulsierenden Druckaufbau führen kann. Dies kann gegebenenfalls vom Fahrer im Rahmen der Bremsbetätigung wahrgenommen werden.

Um diesen Instabilitäten beim Druckaufbau entgegenzuwirken, ist das eingangs genannte Drosselelement vorgesehen. Dieses wird in Abhängigkeit von dem aktuell herrschenden Druck verlagert und drosselt einen Leckagestrom, so dass in der Druckkammer schneller und gleichmäßiger Bremsdruck aufgebaut werden kann. In Abhängigkeit von den aktuell herrschenden Druckverhältnissen im Verbindungsbereich zwischen Fluidreservoir und Druckkammern kann das Drosselelement unterschiedliche Funktionenstellungen einnehmen. Wird beispielsweise in einer Notbrems-Situation durch eine schnelle Verlagerung des Druckkolbens ein schneller und betragsmäßig steiler Druckaufbau erforderlich, so soll das Drosselelement den Bremsflüssigkeitsrückfluss aus der Druckkammer in das Flüssigkeitsreservoir maximal drosseln. Andererseits soll das Drosselelement dann, wenn ein Nachströmen von Bremsflüssigkeit aus dem Flüssigkeitsreservoir erforderlich ist, beispielsweise dann, wenn ein Schlupfregelungssystem Bremsflüssigkeit aus dem Flüssigkeitsreservoir funktionsbedingt benötigt, die Drosselwirkung möglichst gering sein. Hauptbremszylinderanordnungen mit derartigen Drosselelementen sind bereits aus dem Stand der Technik bekannt. So zeigt beispielsweise das Dokument US 6,637,201 B2 eine derartige Hauptbremszylinderanordnung mit zwei Druckkolben, die in dem Hauptbremszylindergehäuse geführt sind. Hinsichtlich der Drosselwirkung, sieht der oben genannte Stand der Technik eine Anordnung mit frei beweglichen separat ausgebildeten Drosselklappen vor. Diese Anordnung ist relativ kompliziert in ihrem Aufbau und hat den Nachteil, dass sie aufgrund der separaten Ausbildung der Drosselklappen für eine fehlerhafte Montage anfällig ist. Darüber hinaus kann gerade diese separate Ausbildung der Drosselklappen dazu führen, dass sich diese verklemmen oder verkanten und so nicht mehr ordnungsgemäß funktionieren.

Die Erfindung betrifft ebenfalls eine integrale Baueinheit laut Anspruch 13.

Die EP-A-2 216 220 zeigt eine integrale Baueinheit umfassend ein Sicherheitsventil zum absperren eines Flüssigkeitsstroms und ein Dichtelement zum Abdichten der Schnittstelle zwischen einem Flüssigkeitsreservoir und einem Hauptbremszylindergehäuse einer Hauptbremszyiinderanordnung.

Das Dokument EP 2 039 574 A1 zeigt eine ähnliche Ausführungsform mit demselben Ziel, in Abhängigkeit von den aktuell im Verbindungsbereich herrschenden Druckverhältnissen unterschiedliche Drosselsituationen für den Flüssigkeitsstrom zwischen dem Flüssigkeitsreservoir und der Druckkammer zu schaffen. Dabei wird dem oben geschilderten Problem der separaten, frei beweglichen Drosselklappen dadurch Rechnung getragen, dass die Drosselklappen jeweils über eine Art Scharnieranordnung an einem der Verbindungsstutzen verschwenkbar angebracht sind. Auch diese Lösung ist aber konstruktiv aufwändig und daher relativ kostenintensiv. Darüber hinaus erfordert sie hohe Sorgfalt bei der Montage, um Montagefehler zu vermeiden.

Schließlich zeigt das Dokument US 2008/0276612 A1 eine verhältnismäßig aufwändige Drosselanordnung, die in und um einen Verbindungsstutzen des Flüssigkeitsreservoirs angebracht wird. Allein die Vielzahl der Teile sowie die Anordnung in dem Verbindungsstutzen erfordert umfassende Montagemaßnahmen, was die Anordnung kostenintensiv macht.

Der Erfindung liegt die Aufgabe zu Grunde, eine Hauptbremszylinderanordnung der eingangs bezeichneten Art bereitzustellen, die bei zuverlässiger Funktionsweise einen deutlich einfacheren und damit kostengünstigeren Aufbau als der Stand der Technik aufweist.

Diese Aufgabe wird durch eine Hauptbremszylinderanordnung der eingangs bezeichneten Art gelöst, bei der vorgesehen ist, dass das wenigstens eine Drosselelement zu einer integralen Baueinheit mit dem Dichtelement zusammengefasst ist.

Die erfindungsgemäße Hauptbremszylinderanordnung weist ebenfalls ein Drosselelement auf, das in Abhängigkeit von den im Verbindungsbereich herrschenden Druckverhältnissen den Fluidstrom zwischen dem Flüssigkeitsreservoir und der wenigstens eine Druckkammer drosselt oder freigibt. Anders als der zitierte Stand der Technik wird diese zur Stabilisierung des Druckaufbaus erforderliche Funktion aber nicht durch komplexe mehrteilige Anordnungen bereitgestellt, die umfassende Herstellungs- und Montagemaßnahmen erfordern. Stattdessen sieht die Erfindung vor, das ohnehin zum Abdichten der Schnittstelle zwischen dem Hauptbremszylindergehäuse und dem Fluidreservoir erforderliche Dichtelement als integrale Baueinheit zusammen mit dem Drosselelement auszugestalten. Mit anderen Worten wird also ein einziges Bauteil bereitgestellt, das sowohl die Dichtfunktion als auch die Drosselfunktion übernimmt. Es sind keine konstruktiven Maßnahmen am Flüssigkeitsreservoir selbst oder an dem Hauptbremszylindergehäuse vorzunehmen. Beide Funktionen lassen sich in der erfindungsgemäßen Baueinheit integrieren.

Weiterbildungen der Erfindung werden im Folgenden mit Bezug auf die abhängigen Ansprüche erläutert.

Eine Weiterbildung der Erfindung sieht vor, dass das Flüssigkeitsreservoir wenigstens einen Verbindungsstutzen mit einer Durchgangsöffnung aufweist, der im montierten Zustand in den Aufnahmeabschnitt des Hauptbremszylindergehäuses hineinragt, wobei zwischen dem Verbindungsstutzen und einer Dichtfläche des Aufnahmeabschnitts des Hauptbremszylindergehäuses das Dichtelement dichtend angeordnet ist.

Dabei kann vorgesehen sein, dass das Drosselelement einen Drosselkörper aufweist, der nach Maßgabe der in seiner Umgebung herrschenden Druckverhältnisse relativ zur Durchgangsöffnung des Verbindungsstutzens bewegbar ist. Insbesondere ist es in diesem Zusammenhang möglich, dass der Drosselkörper über wenigstens zwei flexible Verbindungsstege mit dem Dichtelement gekoppelt ist.

Je nach Anforderungsprofil der Bremsanlage, in der die erfindungsgemäße Hauptbremszylinderanordnung eingesetzt wird, ist das Drosselverhalten des Drosselelements zu wählen. Um eine Anpassung der Drosselwirkung an das jeweilige Anforderungsprofil zu ermöglichen, können unterschiedliche Baueinheiten verwendet werden. Dabei sieht eine Weiterbildung der vorliegenden Erfindung vor, dass die Bewegbarkeit des Drosselkörpers relativ zur Durchgangsöffnung des Verbindungsstutzens durch die Anzahl, geometrische Ausgestaltung und das Material der Verbindungsstege einstellbar ist.

Erfindungsgemäß kann vorgesehen sein, dass der Drosselkörper scheibenförmig oder glockenförmig ausgebildet ist. Eine scheibenförmige Ausgestaltung des Drosselkörpers bietet den Vorteil einer einfacheren Herstellung. Bei einer glockenförmigen Ausgestaltung des Drosselkörpers ist es möglich, dass ein Teil der Glockenform in die Durchgangsöffnung des Verbindungsstutzens hineinragt, wodurch eine zuverlässigere Funktionsweise einerseits und eine gezielte Einflussnahme auf die Drosselwirkung erreicht werden kann. Je nach zu erzielender Drosselwirkung kann auch die Geometrie der Glockenform abgewandelt werden. So lässt sich der Scheitel der Glocke mit stärkerer oder mit weniger starker Rundung, gegebenenfalls sogar mit Spitze, ausbilden, so dass sich im Extremfall eine Konusform ergibt. Vorzugsweise kann vorgesehen sein, dass das Drosselelement die Durchgangsöffnung des Verbindungsstutzens in Durchflussrichtung zumindest teilweise oder ganz abdeckt, wenn man eine Blickrichtung sozusagen frontal (senkrecht) auf die effektive Drosselfläche des Drosselelements wählt. Dabei ist es insbesondere möglich, dass das Drosselelement nach Maßgabe der in seiner Umgebung herrschenden Druckverhältnisse die Durchgangsöffnung des Verbindungsstutzens öffnet oder im Wesentlichen verschließt.

Ferner kann erfindungsgemäß vorgesehen sein, dass das Dichtelement einen Kragenabschnitt aufweist, mit dem es positionierend auf einem den Aufnahmeabschnitt umgebenden Randbereich aufliegt. Dieser Kragenabschnitt sorgt also für eine Sollpositionierung bei der Montage und verhindert, dass das Dichtelement zu weit in den Aufnahmeabschnitt des Hauptbremszylindergehäuses eingedrückt wird.

Eine hinsichtlich Herstellung und Montage besonders einfache Ausgestaltung der Erfindung ergibt sich beispielsweise dann, wenn die das Dichtelement und das Drosselelement umfassende Baueinheit einen integralen gummielastischen Körper umfasst, der mit einem Ringabschnitt oder Schaftabschnitt ausgebildet ist, wobei der Ringabschnitt bzw. Schaftabschnitt dichtend zwischen der Dichtfläche des Aufnahmeabschnitts und dem Verbindungsstutzen angeordnet ist. Ein solcher gummielastischer Körper lässt sich einfach durch Spritzgießen herstellen und umfasst beide erfindungswesentlichen Funktionskomponenten, nämlich Dichtung einerseits und Drosselelement andererseits.

Ferner kann erfindungsgemäß vorgesehen sein, dass die Dichtfläche des Aufnahmeabschnitts profiliert ausgebildet ist und dass der Ringabschnitt eine komplementär profilierte Oberfläche aufweist, wobei die profilierte Dichtfläche des Aufnahmeabschnitts mit der komplementär profilierten Oberfläche des Ringabschnitts in Eingriff bringbar ist oder in Eingriff steht. Dadurch ergeben sich vorteilhafte Eigenschaften zur luft- und fluiddichten Abdichtung des Verbindungsbereichs gegenüber der Umgebung. Insbesondere ist es in diesem Zusammenhang möglich, dass die profilierte Dichtfläche des Aufnahmeabschnitts wenigstens eine Hinterschneidung aufweist, in die die komplementär profilierte Oberfläche des Ringabschnitts eingreift.

Die Erfindung betrifft ferner eine integrale Baueinheit, umfassend wenigstens ein Drosselelement zum Drosseln eines Flüssigkeitsstroms und ein Dichtelement zum Abdichten der Schnittstelle zwischen einem Flüssigkeitsreservoir und einem Hauptbremszylindergehäuse einer Hauptbremszylinderanordnung der vorstehend beschriebenen Art.

Die Erfindung wird beispielhaft anhand der beiliegenden Figuren erläutert. Es stellen dar:
- Fig. 1: eine Seitenansicht einer erfindungsgemäßen Hauptbremszylinderanordnung, bei der das Hauptbremszylindergehäuse in einer achsenthaltenden Schnittansicht gezeigt ist;
- Fig. 2: eine vergrößerte Teilansicht der Darstellung gemäß Figur 1;
- Fig. 3: eine perspektivische, teilweise geschnittene Detailansicht einer zweiten Ausführungsform der Erfindung;
- Fig. 4: eine Ansicht entsprechend Figur 2 der zweiten Ausführungsform der Erfindung;
- Fig. 5 und 6: perspektivische Einzelteilansichten zweier Ausführungsformen zu Baueinheiten mit Dichtfunktion und Drosselfunktion gemäß der vorliegenden Erfindung.

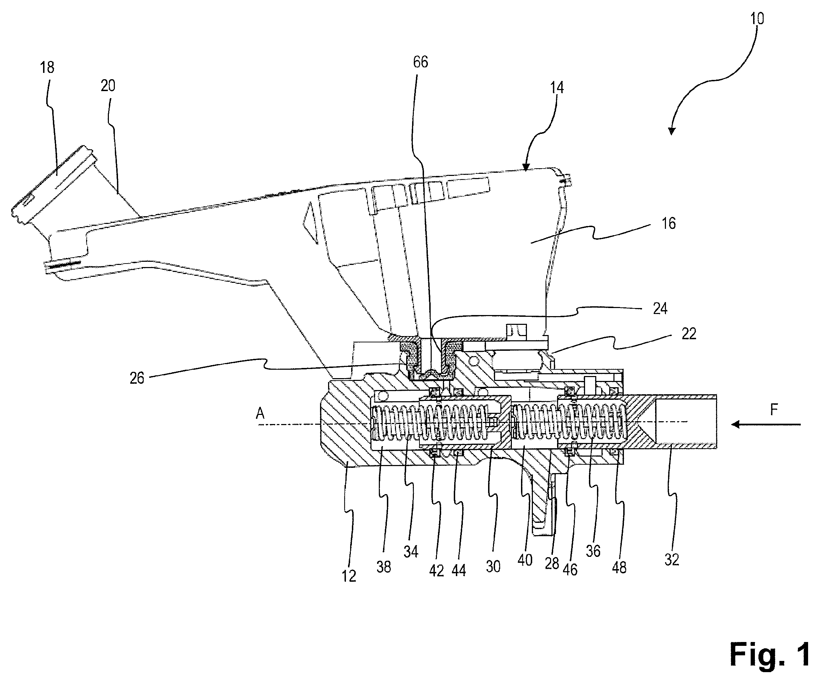

In Figur 1 ist eine Hauptbremszylinderanordnung für eine Kraftfahrzeug-Bremsanlage gemäß der vorliegenden Erfindung gezeigt und allgemein mit 10 bezeichnet. Die Hauptbremszylinderanordnung 10 umfasst ein Hauptbremszylindergehäuse 12 und ein Flüssigkeitsreservoir 14 zur Aufnahme von Bremsflüssigkeit. Das Flüssigkeitsreservoir 14 umfasst einen Speicherkörper 16 mit einem Speichervolumen und einen über einen Stopfen 18 verschließbaren Einfüllstutzen 20. Das Flüssigkeitsreservoir 14 ist über einen Verbindungsbereich 22 mit dem Hauptbremszylindergehäuse 12 verbunden. In diesen Verbindungsbereich 22 ragen von dem Flüssigkeitsreservoir 14 zwei Verbindungsstutzen 24 in zugeordnete Aufnahmeöffnungen 26, die in dem Hauptbremszylindergehäuse 12 vorgesehen sind.

Das Hauptbremszylindergehäuse 12 weist ferner eine zylindrische Ausnehmung 28 auf, in der zwei Druckkolben 30, 32 verschiebbar aufgenommen sind. Jeder der beiden Druckkolben 30, 32 ist über eine Rückstellfeder 34, 36 in eine Figur 1 gezeigte Ausgangsstellung vorgespannt. Die beiden Druckkolben 30, 32 schließen jeweils Druckkammern 38, 40 mit der Innenfläche der zylindrischen Ausnehmung 28 ein.

Hierzu sind im Hauptbremszylindergehäuse 12 Dichtungspaare 42, 44 und 46, 48 vorgesehen.

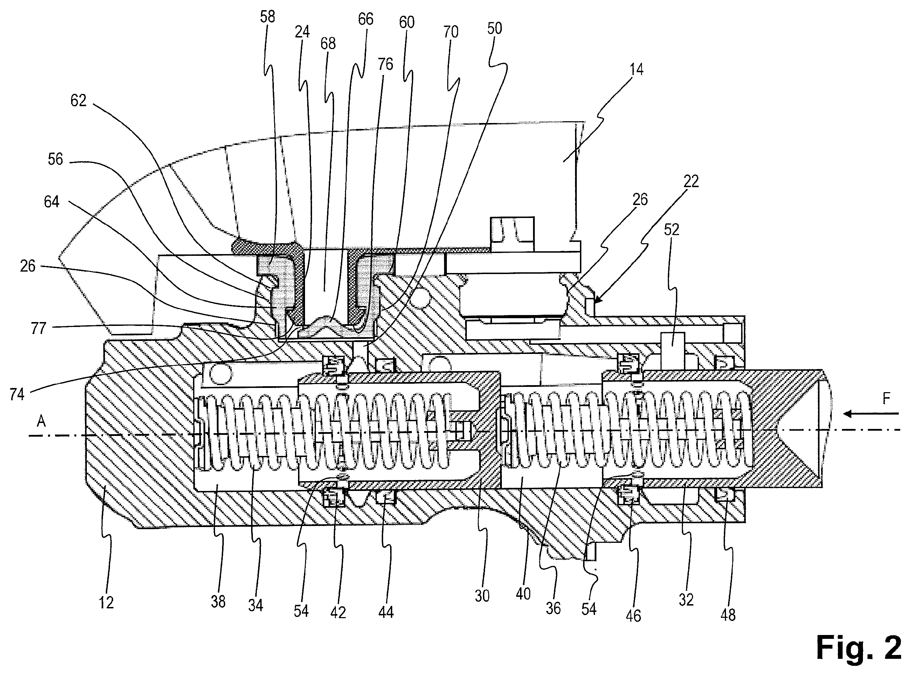

Wie im Detail in Figur 2 zu erkennen ist, sind die beiden Dichtungen 42, 44 und 46, 48 der beiden Dichtungspaare jeweils in einem Abstand voneinander angeordnet. Im Zwischenraum zwischen diesen beiden Dichtungen 42, 44 bzw. 46, 48 verläuft jeweils ein Fluidkanal 50, 52, der fluidisch mit dem Verbindungsbereich 22 verbunden ist. Man erkennt, dass die beiden Druckkolben 30, 32 mit radialen Durchgangsöffnungen 54 versehen sind, die in der in Figur 2 gezeigten Stellung für eine fluidische Verbindung zwischen dem zugeordneten Fluidkanal 50, 52 und der Druckkammer 38, 40 sorgen.

Ferner erkennt man, dass der Verbindungsstutzen 24 in der Aufnahmeöffnung 26 aufgenommen ist, wobei ein stopfenförmiges Bauteil 56 in die Aufnahmeöffnung 26 eingesteckt ist und den Verbindungsstutzen 24 dichtend aufnimmt. Das Bauteil 56 weist einen Kragen 58 auf, der auf einem die Aufnahmeöffnung 26 umgebenden Rand 60 aufliegt. Von dem Kragen 58 ausgehend erstreckt sich ein Schaftabschnitt 62 mit einem radial umlaufenden Ringvorsprung 64 in die Aufnahmeöffnung 26 hinein. An den Schaftabschnitt 62 angeformt ist ein glockenförmiges Drosselelement 66, das mit seinem Scheitelabschnitt in einen Bereich einer Durchgangsöffnung 68 des Verbindungsstutzens 24 hineinragt. Die Aufnahmeöffnung 26 des Hauptbremszylindergehäuses 12 weist ein zum Außenumfangsprofil des Schaftabschnitts 62 korrespondierendes Innenumfangsprofil mit einer Ringausnehmung 70 auf.

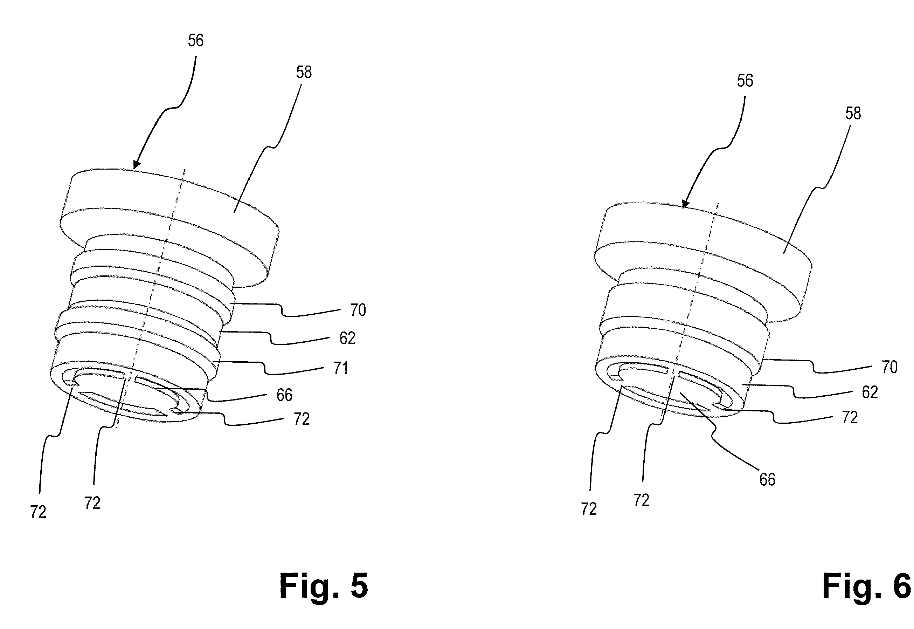

Wendet man sich dem Bauteil 56 zu und berücksichtigt dabei die Einzelteildarstellungen gemäß Figuren 5 und 6, so erkennt man, dass dort das Drosselelement 66 über drei Stege 72 mit dem Schaftabschnitt 62 verbunden ist. In derselben Weise ist auch das glockenförmige Drosselelement 66 bei der Ausführungsform gemäß Figuren 1 und 2 am Schaftabschnitt 62 angebracht. Die Stege 72 sind flexibel und erlauben eine Relativbewegung des Drosselelements 66 relativ zu dem Schaftabschnitt 62. Es sei angemerkt, dass bei der Ausführungsform gemäß Figur 5 statt einem radialen Vorsprung 70 zwei radiale Vorsprünge 70, 71 am Schaftabschnitt 62 vorgesehen sind.

Betrachtet man wiederum Figur 2, so erkennt man, dass das Drosselelement 66 im Ruhezustand mit einem lichten Spalt 74 relativ zu der Stirnfläche 76 am freien Ende des Verbindungsstutzens 24 angeordnet ist. Ferner ist unterhalb des Drosselelements 66 gleichsam ein Zwischenraum 78 vorgesehen. Das Drosselelement 66 hat also einen gewissen Bewegungsspielraum nach oben und nach unten, bevor es bei einer Relativbewegung relativ zum Schaftabschnitt 62 anschlägt.

Schließlich sei angemerkt, dass der Verbindungsstutzen 24 an seinem freien Ende mit einem umlaufenden Keilvorsprung 77 zur Verrastung in dem Stopfen 56 ausgebildet ist.

Die erfindungsgemäße Hauptbremszylinderanordnung 10 gemäß Figuren 1 und 2 funktioniert im Betrieb wie folgt:
Bei einer Betätigung der Bremse werden die beiden Druckkolben 30, 32 durch eine Kraft F entlang der Längsachse A in Figuren 1 und 2 nach links verlagert. Dadurch wird in der in den Druckkammern 38 und 40 enthaltenen Bremsflüssigkeit ein Druck aufgebaut, der zur Erzielung einer Bremswirkung in dem nicht gezeigten Bremskreis des Kraftfahrzeugs ausgenutzt werden soll. Solange aber über die radialen Durchbrüchen 54 in den Druckkolben 30, 32 noch eine Verbindung zu den Fluidkanälen 50, 52 besteht, das heißt solange die Druckkolben 30, 32 noch nicht hinreichend weit verschoben wurden, dass die Durchbrüche 54 die beiden Dichtungen 42 bzw. 46 vollständig passiert haben, könnte der in den Druckkammern 38, 40 aufgebaute Druck als Leckagestrom zum Fluidreservoir 14 hin entweichen, statt für einen Druckaufbau im Bremskreis zu sorgen. Dies würde den wirksamen Aufbau eines Bremsdrucks im Bremskreis verzögern.

Um diesem Effekt entgegenzuwirken, sind die Drosselelemente 66 vorgesehen. Infolge des Druckaufbaus bei einer Bremsbetätigung kommt es zu einem Druckanstieg auf der Unterseite der Drosselelemente 66 und damit zu einer Druckdifferenz zwischen dieser Unterseite und dem druckfreien Innenraum des Flüssigkeitsreservoirs 14. Diese Druckdifferenz führt dazu, dass das über die Stege 72 (siehe Figuren 5 und 6) bewegbar am Schaftabschnitt 62 angebrachte Drosselelement 66 nach oben gedrückt wird und ausweicht, so dass der lichte Spalt 74 verengt oder ganz verschlossen wird. Je nach Druckniveau, das in Folge der Betätigung des Bremspedals in den Druckkammern 38, 40 aufgebaut wird, wird also das Drosselelement 66 infolge der Druckdifferenz in Figuren 1 und 2 nach oben verlagert und verkleinert die Fläche des Spalts 74. Dadurch kommt es zu einem erheblichen Drosseleffekt, der ein Zurückströmen von Bremsflüssigkeit aus den Druckkammern 38, 40 in das Fluidreservoir 14 behindert. Dies hat zur Folge, dass selbst dann, wenn die Durchbrüche 54 die Dichtungen 42 bzw. 46 noch nicht vollständig passiert haben, in den Druckkammern 38, 40 schneller ein bremswirksamer Druck aufgebaut und ein Zurückströmen von Bremsflüssigkeit aus den Druckkammern 38,40 minimiert oder ganz unterbunden werden kann. Die Kraftfahrzeug-Bremsanlage spricht also aufgrund der Drosselelemente 66 schneller an.
Sobald die Durchbrüche 54 die Dichtungen 42 bzw. 46 passiert haben, spielt die Wirkung des Drosselelements 66 für den Druckaufbau in den Druckkammern 38, 40 keine Rolle mehr. Es kommt am Drosselelement 66 zu einem Druckausgleich und dieses nimmt seine in Figuren 1 und 2 gezeigte Ausgangsstellung ein.

Nach Beendigung der Bremsbetätigung und Freigabe des Bremspedals bewegen sich die beiden Druckkolben 30, 32 unter der Wirkung der Rückstellfedern 34, 36 in ihre Ausgangsstellung zurück. Dabei wird in an sich bekannter Weise Bremsflüssigkeit aus dem Flüssigkeitsreservoir 54 angesaugt, wobei die Dichtungen 42, 46 in ebenfalls bekannter Weise überströmt werden. Die Drosselelemente 66 behindern das Zurückströmen von Bremsflüssigkeit nicht, weil durch die anliegende allenfalls geringe Druckdifferenz der Spalt 74 tendenziell vergrößert wird.

Wenn die Kraftfahrzeug-Bremsanlage ein Schlupfregelsystems aufweist, das in dem Bremskreis angeordnet ist, dann kommt es bei Aktivierung des Schlupfregelsystems und ansonsten nicht aktivierter Bremse dazu, dass das Schlupfregelsystems über eine Druckpumpe zum Aufbau eines Bremsdrucks Bremsflüssigkeit über den Hauptbremszylinder 10 aus dem Flüssigkeitsreservoir 14 ansaugt, beispielsweise zum Abbremsen eines durchdrehenden Antriebsrades. In diesem Fall kommt es wiederum zu einer Druckdifferenz am Drosselelement 66, wobei ein Unterdruck an der Unterseite des Drosselelements 66 entsteht. Dies führt dazu, dass das Drosselelement 66 tendenziell in Figuren 1 und 2 nach unten bewegt wird und somit der Spalt 74 weiter wird als in seinem Ausgangszustand. Dadurch wird gewährleistet, dass sich ein vergrößerter Durchflussquerschnitt einstellt, so dass schnell und mit minimaler Drosselwirkung Bremsflüssigkeit aus dem Flüssigkeitsreservoir 14 angesaugt und über die Hauptbremszylinderanordnung 10 dem Kraftfahrzeug-Bremskreis zugeführt werden kann.

Ein wesentlicher Vorteil der vorliegenden Erfindung liegt darin, dass das integral ausgebildete Bauteil 56 zwei Funktionen in sich vereint: Zum einen erfüllt es die Funktion der Aufnahme, Positionierung und insbesondere Abdichtung des Verbindungsstutzens 24 des Flüssigkeitsreservoir 14 relativ zum Hauptbremszylindergehäuse 12. Des weiteren umfasst das integral ausgebildete Bauteil 56 aber auch das Drosselelement 66 mit der vorstehend geschilderten Funktionsweise. Diese integrale Ausbildung des Bauteils 56 mit den beiden Funktionen ermöglicht eine relativ schnelle und fehlerfreie Montage der Anordnung. Das Bauteil 56 muss lediglich in die Aufnahmeöffnungen 26 des Hauptbremszylindergehäuses 12 eingedrückt werden. Bei Anlage des Kragens 58 an der Oberfläche 50 ist es korrekt positioniert. Sodann muss nur noch das Flüssigkeitsreservoir 14 mit seinen Verbindungsstutzen 24 eingedrückt und über den Rastring 77 verankert werden. Sobald dies erfolgt ist, sind beide Funktionen - Dichtung und druckabhängige Drosselung - gewährleistet.

Vorzugsweise ist das Bauteil 56 aus einem gummielastischen Material hergestellt. Je nach Ausgestaltung des Bremssystems werden die Stege 72 massiver oder weniger massiv, mit größerer bzw. kleinerer Materialstärke oder mit größerer bzw. kleinerer Breite ausgeführt, um die Bewegbarkeit des Drosselelement 66 relativ zum Schaftabschnitt 62 zu reduzieren oder zu vergrößern. Ferner lässt sich in Abhängigkeit von der Geometrie der einzelnen Komponenten sowie von der gewünschten Drosselwirkung die effektive Fläche B des Drosselelements 66 größer oder kleiner gestalten. Auch die Größe dieser Fläche hat Einfluss auf die Drosselwirkung

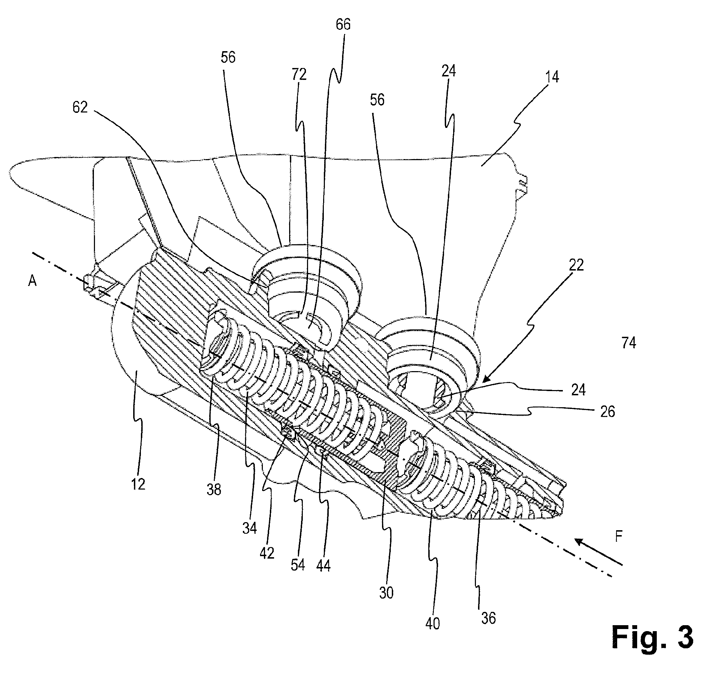

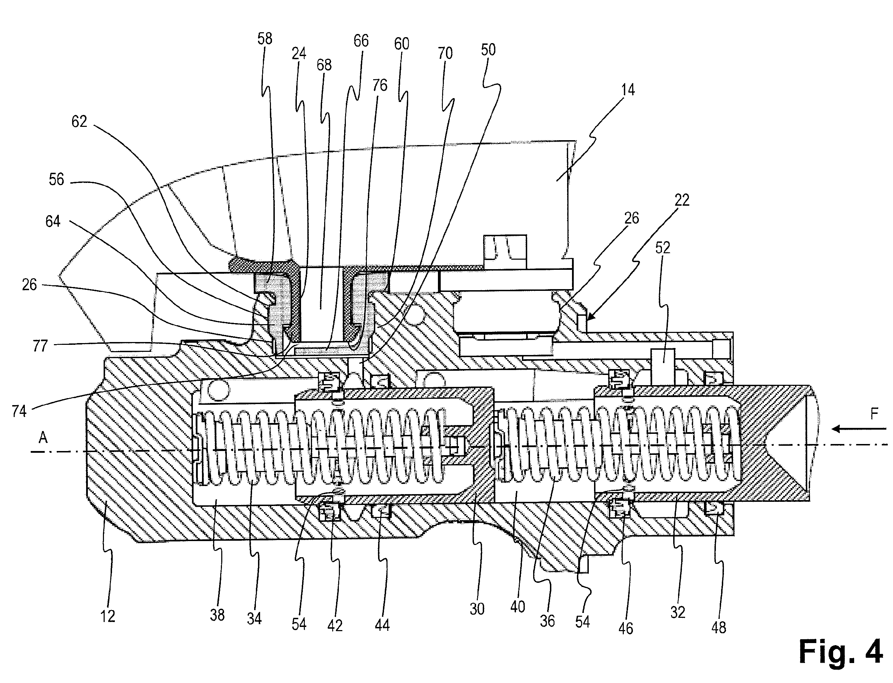

In Figuren 3 und 4 ist eine alternative Ausführungsform der vorliegenden Erfindung dargestellt. Zur Vermeidung von Wiederholungen und zur Vereinfachung der Beschreibung werden für gleichwirkende oder gleichartige Komponenten dieselben Bezugszeichen verwendet, wie bei der vorstehenden Beschreibung des ersten Ausführungsbeispiels nach Figuren 1 und 2.

Der einzige Unterschied zwischen der Ausführungsform gemäß den Figuren 3 und 4 zu der ersten Ausführungsform gemäß den Figuren 1 und 2 besteht darin, dass das Drosselelement 66' nicht glockenförmig sondern eben ausgebildet ist. Die übrige Funktionsweise ist aber im Wesentlichen dieselbe, wobei anzumerken ist, dass bei glockenförmiger Ausgestaltung gemäß der ersten Ausführungsform eine Verstärkung der Drosselwirkung erreicht werden kann. Ferner sei angemerkt, dass die Geometrie der Glockenform variiert werden kann.

## Patentansprüche

1. Hauptbremszylinderanordnung (10) für eine Kraftfahrzeug-Bremsanlage, umfassend:
- ein Hauptbremszylindergehäuse (12) mit einer zylindrischen Ausnehmung (28),
- wenigstens einen in der zylindrischen Ausnehmung (28) des Hauptbremszylindergehäuses (12) verlagerbar und dichtend geführten Druckkolben (30, 32),
- ein mit dem Hauptbremszylindergehäuse (12) über einen Verbindungsbereich (22) fluidisch gekoppeltes Flüssigkeitsreservoir (14) zum Speichern von Bremsflüssigkeit,
wobei der wenigstens eine Druckkolben (30, 32) mit dem Hauptbremszylindergehäuse (12) eine Druckkammer (38, 40) dichtend einschließt, die in Abhängigkeit von der Stellung des zugeordneten Druckkolbens (30, 32) fluidisch mit dem Flüssigkeitsreservoir (14) verbunden oder von diesem getrennt ist,
wobei die wenigstens eine Druckkammer (38, 40) ferner fluidisch mit einem Fluidkreis der Kraftfahrzeug-Bremsanlage koppelbar oder gekoppelt ist,
wobei das Flüssigkeitsreservoir (14) in dem Verbindungsbereich (22) mittels eines Dichtelements (62) dichtend in einem Aufnahmeabschnitt (26) des Hauptbremszylindergehäuses (12) aufgenommen ist,
und wobei in dem Verbindungsbereich (22) wenigstens ein Drosselelement (66) vorgesehen ist, das in Abhängigkeit von den Druckverhältnissen in der wenigstens einen Druckkammer (38, 40) den Fluidstrom zwischen dem Flüssigkeitsreservoir (14) und der wenigstens einen Druckkammer (38, 40) durch den Verbindungsbereich (22) drosselt oder freigibt,
**dadurch gekennzeichnet, dass** das wenigstens eine Drosselelement (66) zu einer integralen Baueinheit mit dem Dichtelement (62) zusammengefasst ist.

2. Hauptbremszylinderanordnung (10) nach Anspruch 1,
**dadurch gekennzeichnet, dass** das Flüssigkeitsreservoir (14) wenigstens einen Verbindungsstutzen (24) mit einer Durchgangsöffnung (68) aufweist, der im montierten Zustand in den Aufnahmeabschnitt (26) des Hauptbremszylindergehäuses (12) hineinragt, wobei zwischen dem Verbindungsstutzen (24) und einer Dichtfläche des Aufnahmeabschnitts (26) des Hauptbremszylindergehäuses (12) das Dichtelement (62) dichtend angeordnet ist.

3. Hauptbremszylinderanordnung (10) nach Anspruch 2,
**dadurch gekennzeichnet, dass** das Drosselelement einen Drosselkörper (66) aufweist, der nach Maßgabe der in seiner Umgebung herrschenden Druckverhältnisse relativ zur Durchgangsöffnung (68) des Verbindungsstutzens (24) bewegbar ist.

4. Hauptbremszylinderanordnung (10) nach Anspruch 3,
**dadurch gekennzeichnet, dass** der Drosselkörper (66) über wenigstens zwei flexible Verbindungsstege (72) mit dem Dichtelement (62) gekoppelt ist.

5. Hauptbremszylinderanordnung (10) nach Anspruch 4,
**dadurch gekennzeichnet, dass** die Bewegbarkeit des Drosselkörpers (66) relativ zur Durchgangsöffnung (68) des Verbindungsstutzens (24) durch die Anzahl, geometrische Ausgestaltung und das Material der Verbindungsstege (72) einstellbar ist.

6. Hauptbremszylinderanordnung (10) nach einem der Ansprüche 2 bis 5,
**dadurch gekennzeichnet, dass** der Drosselkörper (66, 66') scheibenförmig oder glockenförmig ausgebildet ist.

7. Hauptbremszylinderanordnung (10) nach einem der vorangehenden Ansprüche,
**dadurch gekennzeichnet, dass** das Drosselelement die Durchgangsöffnung (68) des Verbindungsstutzens (24) in Durchflussrichtung zumindest teilweise abdeckt.

8. Hauptbremszylinderanordnung (10) nach einem der vorangehenden Ansprüche,
**dadurch gekennzeichnet, dass** das Drosselelement (66) nach Maßgabe der in seiner Umgebung herrschenden Druckverhältnisse die Durchgangsöffnung (68) des Verbindungsstutzens (24) öffnet oder im Wesentlichen verschließt.

9. Hauptbremszylinderanordnung (10) nach einem der vorangehenden Ansprüche,
**dadurch gekennzeichnet, dass** das Dichtelement (62) einen Kragenabschnitt (58) aufweist, mit dem es positionierend auf einem den Aufnahmeabschnitt (26) umgebenden Randbereich (60) aufliegt.

10. Hauptbremszylinderanordnung (10) nach einem der vorangehenden Ansprüche,
**dadurch gekennzeichnet, dass** die das Dichtelement (62) und das Drosselelement (66) umfassende Baueinheit einen integralen gummielastischen Körper (56) umfasst, der mit einem Ringabschnitt ausgebildet ist, wobei der Ringabschnitt dichtend zwischen der Dichtfläche des Aufnahmeabschnitts (26) und dem Verbindungsstutzen (24) angeordnet ist.

11. Hauptbremszylinderanordnung (10) nach Anspruch 10,
**dadurch gekennzeichnet, dass** die Dichtfläche des Aufnahmeabschnitts (26) profiliert ausgebildet ist und dass der Ringabschnitt eine komplementär profilierte Oberfläche aufweist, wobei die profilierte Dichtfläche des Aufnahmeabschnitts (26) mit der komplementär profilierten Oberfläche des Ringabschnitts in Eingriff bringbar ist oder in Eingriff steht.

12. Hauptbremszylinderanordnung (10) nach Anspruch 11,
**dadurch gekennzeichnet, dass** die profilierte Dichtfläche des Aufnahmeabschnitts wenigstens eine Hinterschneidung (70) aufweist, in die die komplementär profilierte Oberfläche des Ringabschnitts eingreift.

13. Integrale Baueinheit (56) umfassend wenigstens ein Drosselelement (66) zum Drosseln eines Flüssigkeitsstroms und ein Dichtelement (26) zum Abdichten der Schnittstelle zwischen einem Flüssigkeitsreservoir (14) und einem Hauptbremszylindergehäuse (12) einer Hauptbremszylinderanordnung (10) nach einem der vorangehenden Ansprüche.

## Claims

1. Master brake cylinder arrangement (10) for a motor vehicle brake system, comprising:
- a master brake cylinder housing (12) with a cylindrical recess (28),
- at least one pressure piston (30, 32) which is displaceable and sealingly guided in the cylindrical recess (28) of the master brake cylinder housing (12),
- a fluid reservoir (14) which is fluidically coupled by a connecting region (22) to the master brake cylinder housing (12) and which serves for storing brake fluid,
wherein the at least one pressure piston (30, 32) together with the master brake cylinder housing (12) sealingly encloses a pressure chamber (38,40) which, as a function of the position of the associated pressure piston (30, 32), is fluidically connected to or separated from the fluid reservoir (14),
wherein furthermore the at least one pressure chamber (38, 40) can be or is fluidically coupled to a fluid circuit of the motor vehicle brake system,
wherein the fluid reservoir (14) in the connecting region (22) is received, in a manner sealed by means of a sealing element (62), in a receiving portion (26) of the master brake cylinder housing (12),
and wherein at least one throttle element (66) is provided in the connecting region (22), which throttle element (66) as a function of the pressure conditions in the at least one pressure chamber (38, 40) throttles or derestricts the fluid stream between the fluid reservoir (14) and the at least one pressure chamber (38, 40) through the connecting region (22),
**characterized in that** the at least one throttle element (66) is combined with the sealing element (62) so as to form an integral structural unit.

2. Master brake cylinder arrangement (10) according to claim 1,
**characterized in that** the fluid reservoir (14) comprises at least one connecting socket (24) with a through-opening (68), which connecting socket (24) in the assembled state projects into the receiving portion (26) of the master brake cylinder housing (12), wherein between the connecting socket (24) and a sealing surface of the receiving portion (26) of the master brake cylinder housing (12) the sealing element (62) is sealingly disposed.

3. Master brake cylinder arrangement (10) according to claim 2,
**characterized in that** the throttle element comprises a throttle body (66), which in accordance with the pressure conditions prevailing in its environment is movable relative to the through-opening (68) of the connecting socket (24).

4. Master brake cylinder arrangement (10) according to claim 3,
**characterized in that** the throttle body (66) is coupled by at least two flexible connecting webs (72) to the sealing element (62).

5. Master brake cylinder arrangement (10) according to claim 4,
**characterized in that** the mobility of the throttle body (66) relative to the through-opening (68) of the connecting socket (24) is adjustable by means of the number, geometric design and the material of the connecting webs (72).

6. Master brake cylinder arrangement (10) according to any of claims 2 to 5,
**characterized in that** the throttle body (66, 66') is of a disk-shaped or bellshaped configuration.

7. Master brake cylinder arrangement (10) according to any foregoing claim,
**characterized in that** the throttle element at least partially covers the through-opening (68) of the connecting socket (24) in throughflow direction.

8. Master brake cylinder arrangement (10) according to any foregoing claim,
**characterized in that** the throttle element (66) in accordance with the pressure conditions prevailing in its environment opens or substantially closes the through-opening (68) of the connecting socket (24).

9. Master brake cylinder arrangement (10) according to any foregoing claim,
**characterized in that** the sealing element (62) comprises a collar portion (58), by which it is supported in a positioning manner on an edge region (60) that surrounds the receiving portion (26).

10. Master brake cylinder arrangement (10) according to any foregoing claim,
**characterized in that** the structural unit comprising the sealing element (62) and the throttle element (66) comprises an integral, resilient body (56) that is constructed with an annular portion, wherein the annular portion is disposed sealingly between the sealing surface of the receiving portion (26) and the connecting socket (24).

11. Master brake cylinder arrangement (10) according to claim 10,
**characterized in that** the sealing surface of the receiving portion (26) is of a profiled construction and that the annular portion has a surface with a complementary profile, wherein the profiled sealing surface of the receiving portion (26) may be moved into engagement or is engaged with the surface of the annular portion with the complementary profile.

12. Master brake cylinder arrangement (10) according to claim 11,
**characterized in that** the profiled sealing surface of the receiving portion (26) has at least one undercut (70), into which the surface of the annular portion with the complementary profile engages.

13. Integral structural unit (56) comprising at least one throttle element (66) for throttling a fluid stream as well as a sealing element (26) for sealing the interface between a fluid reservoir (14) and a master brake cylinder housing (12) according to any foregoing claim.

## Revendications

1. Ensemble maître-cylindre (10) pour un système de freinage de véhicule à moteur, comprenant :
- un boîtier de maître-cylindre (12) comprenant un évidement cylindrique (28),
- au moins un piston de compression (30, 32) guidé de façon déplaçable et étanche dans l'évidement cylindrique (28) du boîtier de maître-cylindre (12),
- un réservoir de liquide (14) couplé fluidiquement au boîtier de maître-cylindre (12) par une zone de raccord (22) et destiné à stocker un liquide de frein, dans lequel ledit au moins un piston de compression (30, 32) renferme de façon étanche avec le boîtier de maître-cylindre (12) une chambre de compression (38, 40) qui, en fonction de la position du piston de compression (30, 32) associé, est reliée fluidiquement au réservoir de liquide (14) ou en est séparée,
dans lequel ladite au moins une chambre de compression (38, 40) est en outre couplable ou couplée fluidiquement à un circuit de fluide du système de freinage de véhicule à moteur,
dans lequel le réservoir de liquide (14)est reçu de façon étanche dans une partie de réception (26) du boîtier de maître-cylindre (12) au moyen d'un élément d'étanchéité (62) dans la zone de raccord (22),
et dans lequel au moins un élément d'étranglement (66) est prévu dans la zone de raccord (22), lequel limite ou libère le courant de fluide entre le réservoir de liquide (14) et ladite au moins une chambre de compression (38, 40) à travers la zone de raccord (22) en fonction des conditions de pression dans ladite au moins une chambre de compression (38, 40),
**caractérisé en ce que** ledit au moins un élément d'étranglement (66) est réuni avec l'élément d'étanchéité (62) en une unité de construction intégrée.

2. Ensemble maître-cylindre (10) selon la revendication 1,
**caractérisé en ce que** le réservoir de liquide (14) comprend au moins un manchon de raccord (24) avec une ouverture de passage (68) qui, à l'état monté, pénètre dans la partie de réception (26) du boîtier de maître-cylindre (12), l'élément d'étanchéité (62) étant disposé de façon étanche entre le manchon de raccord (24) et une surface d'étanchéité de la partie de réception (26) du boîtier de maître-cylindre (12).

3. Ensemble maître-cylindre (10) selon la revendication 2,
**caractérisé en ce que** l'élément d'étranglement présente un corps d'étranglement (66) qui est mobile par rapport à l'ouverture de passage (68) du manchon de raccord (24) en fonction des conditions de pression qui règnent dans son environnement.

4. Ensemble maître-cylindre (10) selon la revendication 3,
**caractérisé en ce que** le corps d'étranglement (66) est couplé à l'élément d'étanchéité (62) par au moins deux entretoises de liaison flexibles (72).

5. Ensemble maître-cylindre (10) selon la revendication 4,
**caractérisé en ce que** la mobilité du corps d'étranglement (66) par rapport à l'ouverture de passage (68) du manchon de raccord (24) est réglable par le nombre, la configuration géométrique et le matériau des entretoises de liaison (72).

6. Ensemble maître-cylindre (10) selon l'une des revendications 2 à 5,
**caractérisé en ce que** le corps d'étranglement (66, 66') est réalisé en forme de disque ou de cloche.

7. Ensemble maître-cylindre (10) selon l'une des revendications précédentes,
**caractérisé en ce que** l'élément d'étranglement recouvre partiellement l'ouverture de passage (68) du manchon de raccord (24) dans la direction d'écoulement.

8. Ensemble maître-cylindre (10) selon l'une des revendications précédentes,
**caractérisé en ce que** l'élément d'étranglement (66) ouvre ou ferme sensiblement l'ouverture de passage (68) du manchon de raccord (24) en fonction des conditions de pression qui règne dans son environnement.

9. Ensemble maître-cylindre (10) selon l'une des revendications précédentes,
**caractérisé en ce que** l'élément d'étanchéité (62) comprend une partie formant collerette (58) avec laquelle il repose en assurant le positionnement sur une zone de bord (60) entourant la partie de réception (26).

10. Ensemble maître-cylindre (10) selon l'une des revendications précédentes,
**caractérisé en ce que** l'unité de construction comprenant l'élément d'étanchéité (62) et l'élément d'étranglement (66) comprend un corps intégré à élasticité caoutchoutique (56) qui est réalisé avec une partie annulaire, la partie annulaire étant disposée de façon étanche entre la surface d'étanchéité de la partie de réception (26) et le manchon de raccord (24).

11. Ensemble maître-cylindre (10) selon la revendication 10,
**caractérisé en ce que** la surface d'étanchéité de la partie de réception (26) est réalisée profilée et que la partie annulaire présente une surface profilée de façon complémentaire, la surface d'étanchéité profilée de la partie de réception (26) pouvant être mise en prise ou étant en prise avec la surface profilée de façon complémentaire de la partie annulaire.

12. Ensemble maître-cylindre (10) selon la revendication 11,
**caractérisé en ce que** la surface d'étanchéité profilée de la partie de réception présente au moins une contre-dépouille (70) dans laquelle s'engage la surface profilée de façon complémentaire de la partie annulaire.

13. Unité de construction intégrée (56) comprenant au moins un élément d'étranglement (66) pour limiter un courant de liquide et un élément d'étanchéité (26) pour rendre étanche l'interface entre un réservoir de liquide (14) et un boîtier de maître-cylindre (12) d'un ensemble maître-cylindre (10) selon l'une des revendications précédentes.
